## Europäisches Patentamt
## European Patent Office
## Office européen des brevets

(11) Publication number: **0 049 719**
**B1**

(12)

# EUROPEAN PATENT SPECIFICATION

(45) Date of publication of patent specification: **30.01.85**

(51) Int. Cl.⁴: **F 16 J 15/40**

(21) Application number: **80303561.7**

(22) Date of filing: **09.10.80**

(54) **Low energy tandem seal.**

(43) Date of publication of application:
**21.04.82 Bulletin 82/16**

(45) Publication of the grant of the patent:
**30.01.85 Bulletin 85/05**

(84) Designated Contracting States:
**AT BE CH DE FR GB IT LI LU NL SE**

(56) References cited:
FR-A-2 039 940
US-A-3 051 497
US-A-3 937 477
US-A-3 963 247

(73) Proprietor: **JOHN CRANE-HOUDAILLE, INC.**
**6400 Oakton Street**
**Morton Grove Illinois 60053 (US)**

(72) Inventor: **Baker, Dorsey L.**
**28 W. 340 Indian Knoll**
**West Chicago Illinois 60185 (US)**
Inventor: **Sedy, Josef**
**1718 Waukegan Road**
**Glenview, Illinois 60025 (US)**

(74) Representative: **Madgwick, Paul Roland et al**
**Ladas & Parry Isartorplatz 5**
**D-8000 München 2 (DE)**

EP 0 049 719 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a tandem seal for precluding fluid leakage from the circumferential space between a shaft and a housing. It includes an end face seal uniquely coupled to a dynamic pressure generating seal. During static conditions, the end face seal precludes loss of fluid. During rotation of the shaft the dynamic seal precludes loss of fluid and disengages the end face seal.

Mechanical end face seals have become an accepted device to seal the circumferential space between a shaft and a housing. Such seals include two seal washers. One is mounted in sealing engagement on the shaft and is usually biased axially towards the housing. The other washer is fixed to the housing. The two washers have radially extending faces in rotating contact which are sufficiently flat to preclude fluid leakage. While such seals are quite acceptable, they do utilize energy. The rotating contact between the faces results in undesirable friction losses.

The loss has been previously recognized and attempts have been made to eliminate it. One prior design is illustrated by U.S. Patent No. 1,947,017. In that design, the patentee uses an end face seal to preclude loss of fluid during the static — non-operating condition of the pump. Upon rotation of the shaft, a hydraulic cylinder responding to fluid pressure disengages the end face seal and a separate repeller is used to limit or preclude leakage from between the pump housing and the shaft. This design is complicated. It requires a separate repeller and chamber in the pump housing. It also requires an external pressure sensing chamber, a separate hydraulic cylinder and complicated linkages. Another design in commercial use also utilizes a separated repeller and sophisticated pressure sensing chamber.

U.S. Patent 3 937 477 discloses a sealing system for a rotatable shaft positioned in a passage in a housing where static and dynamic sealing are achieved. The system includes a helix on the shaft or on the wall surrounding it to provide a viscous shear pump forming a hydrodynamic seal. A separate face seal is provided near the air side end of the helix to seal under static conditions and reduce face contact during rotation.

U.S. Patent 3 963 247 discloses a sealing system including a "floating stator" and a rotor with two oppositely oriented helical windings with an annular chamber between the windings. The stator has a bore communicating with the chamber. The stator, or a sealing element attached thereto, is moved against a resilient force to produce sealing at static conditions. An extraneous fluid is used to seal during rotation.

U.S. Patent 3 051 497 also uses an extraneous fluid to effect sealing during rotation by forming a gas-oil interface. Static sealing is produced by a sealing surface actuated by gas pressure.

In particular, the invention provides a low energy tandem seal for sealing the space (20) between a housing (14) and a shaft (16), the seal including a dynamic sealing means, (30) pumping means (32) and a static sealing means (60) interconnected to each other and interposed between said housing (14) and said shaft (16), characterised in that said sealing means (30, 36) receive fluid to be sealed from said housing (14), said static sealing means (60) precluding the loss of fluid from said housing (14) when said shaft (16) is not rotating, said dynamic sealing means (30) including the pumping means (32) for pumping the fluid to be sealed back to said housing (14) and for axially translating a member (56) which includes a portion of the dynamic sealing means in response to pumping of sealed fluid to disengage said static seal (60) said static seal including a portion (72) carried by said member and axially translated with said member.

Advantageously, the tandem seal is preferably arranged in cartridge form which can be installed in existing pump housings. It eliminates the use of a separate repeller, modification of the pump housing casting to include a repeller chamber and incurs minimum power losses in effecting its sealing function. Wear and seal part replacement problems are substantially eliminated.

The seal is preferably formed as a combination end face seal and a dynamic pumping seal. The two seals are interconnected physically and functionally such that the end face seal is operative during static conditions and inoperative during dynamic conditions. Under the latter conditions, the pumping seal precludes loss of fluid.

In the preferred embodiment, the invention takes the form of a cartridge type unit which is preassembled for installation over the concentric with the pumping shaft. Neither embodiment requires modification of existing pump housings or the use of repellers or other linkages. In both embodiments, the preferred form of the dynamic-pumping seal is a set of small diameter pumping rings mounted within a pressure sensitive chamber which is axially movable to effect disengagement of the end face seal during pump operation.

Advantageously, the small integral tandem seal eliminates the use of pump housing modifications and impellers and friction — power losses.

In the drawings:

FIGURE 1 is a side elevation view in section of a preferred embodiment of the tandem seal;

FIGURE 2 is a perspective view of the embodiment of FIGURE 1 with portion broken away; and

FIGURE 3 is a side elevation view of another embodiment of the seal.

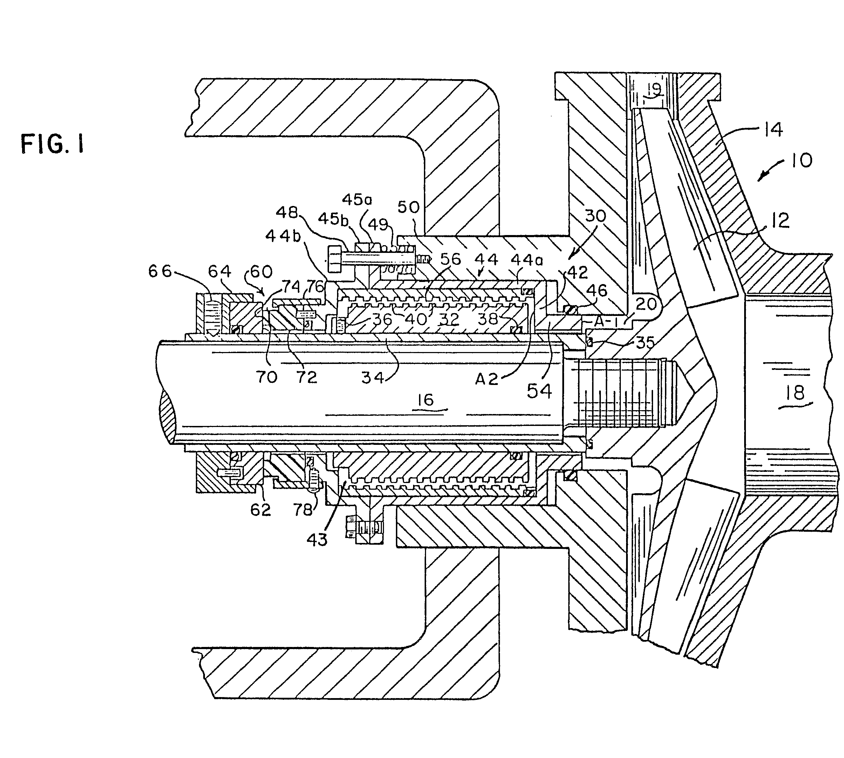

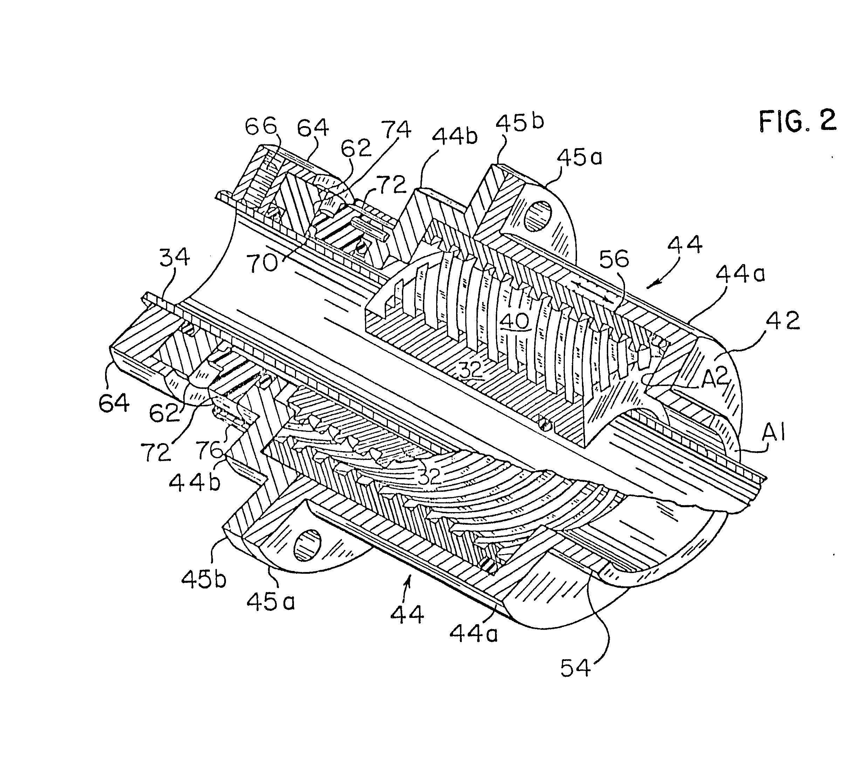

As illustrated in FIGURES 1 and 2 a preferred embodiment is associated with a centrifugal pump 10. This pump 10 includes an impeller 12 which is positioned within a housing 14 and driven by a shaft 16. Upon rotation of the shaft 16 and impeller 12, fluid is drawn through an intake 18 and forced radially outward towards the periphery of the housing 10 on which is located a discharge conduit 19.

Our seal is interposed between the housing 14 of the pump 10 and the shaft 16. Its purpose is to preclude, with minimum energy requirements, the loss of fluid through the circumferential space 20 between the housing 14 and the shaft 16. This loss of fluid can occur either when the pump is operating and generating fluid pressure or when it is static — not operating, the fluid leakage resulting from a pressure head existing at the pump intake 18.

The space 20 is normally sealed by a mechanical end face seal. These seals, however, do utilize energy and incur friction losses during operating conditions. Our invention does include such a seal. However, it is effective only when the pump is not operating and is used to seal the space 20 against leakage from a fluid pressure head existing within the pump. Under these conditions, the seal incurs no friction losses and uses no energy.

During operation of the pump, our invention uses a low energy dynamic sealing means 30 to preclude fluid leakage. This sealing means generates a back pressure opposing the flow of fluid from the housing 14 and includes a pressure responsive means which disengages the washers of the end face seal 60 to eliminate friction losses. It is our belief that this dynamic seal, while requiring some energy, may reduce the total seal energy loss incurred by the end face seal by at least one half. Moreover, we believe that the energy loss incurred by the dynamic seal is directly proportional to the diameter of the repeller. Contrary to the use of a large diameter repeller, our dynamic seal uses pumping rings having a small diameter — further reducing the energy loss.

As shown in FIGURES 1 and 2, the dynamic sealing means is indicated at 30 and the static or end face sealing means is indicated at 60. Preferably, these two sealing means are physically interconnected to insure cooperative results in sealing the space 20 with a minimum energy loss.

The dynamic seal 30 is positioned concentric of shaft 16. It includes an internal threaded member or pumping ring 32 which is mounted on the shaft for rotation therewith. The mounting may take the form of a sleeve 34 which carries the entire seal assembly. This sleeve is mounted over the shaft and is sealed by an O-ring 35. The inner pumping ring 32 is mounted over this sleeve and constrained for rotation with the sleeve by one or more set screws 36. An O-ring 38 may be used as a seal between the inner ring 32 and sleeve 34. Threads 40 are formed on the outer circumference of the pumping ring which, upon rotation, will pump fluid or develop fluid pressure acting in the direction of the impeller 12 to oppose fluid pressure developed by the impeller within the housing 14.

As depicted in FIGURE 1, the pressure generated by this inner pumping ring is directed against a radial flange 42 of a pressure responsive collar 44 which, together with the ring 32 define a pressure chamber 43. This collar is concentric of shaft 16 and has two sections 44a and 44b. As shown, it is sealingly mounted in the housing 14 by an O-ring 46, and a plurality of guide bolts 48 so as to be capable of axial movement. Springs 49 mounted on guide bolts 48 exert an axial expansion force between a rearward extending hub 50 of housing 14 and a radial flange 45a of the collar section 44a. This spring force urges the collar away from the impeller 12. In addition, fluid pressure in the housing 14 acts upon the face A—1 of forward reduced section 54 of collar 44 to urge the collar in the same direction. However, upon rotation of the shaft 16, the pumping ring 32 will tend to pump fluid towards the impeller 12 and develops a fluid pressure within the collar 44 which opposes fluid leakage through the space 20 and which acts upon the surface A—2 of flange 42 to shift the pressure responsive collar 44 towards the impeller 12. The pumping ring, the areas A—1 and A—2 and the springs should be designed and sized such that the pressure generated is sufficient to oppose fluid pressure in housing 14 and simultaneously shift the pressure responsive collar 44 to the right. If desired, an outer pumping ring 56 may be inserted within the collar 44 as shown in the drawings. The design of the pumping rings and the threads which maximizes fluid pressure are known to those skilled in the art. In the preferred embodiment, the design is made in accord with threaded pumping principles set forth in a paper presented at the Fourth International Conference on Fluid Sealing by A. I. Golubiev, and in an article appearing in "Wear" magazine, Volume 8, pages 279—288 by A. I. Golubiev. The dynamic sealing utilizes very little energy and is believed to require less than one half of the energy normally consumed by end face seals.

However, when the pump is not operating, no dynamic sealing occurs. For this reason, applicants' invention includes a cooperative end face seal 60 which is activated by the absence of fluid pressure dynamic sealing. Under static conditions, the springs 49 urge the pressure collar 44 away from the impeller 12 to effect engagement of the end face seal 60. This seal includes a sealing washer 62 which is sealingly mounted on the sleeve 34 and constrained for rotation therewith by a retainer 64 held in place by a set screw 66. The washer has a radially extending sealing surface 70. Under static, non-operating conditions, a second washer 72 has a radially extending face 74 in mating sealing engagement with the face 70. This washer is carried by and moves axially with the pressure responsive collar 44. A retainer 76, preferably in the shape shown, interconnects the washer 72 with section 44b of the collar 44 by one or more screws 78. The section 44b, as depicted, seats against the rear surface of washer 72 and has a radially extending flange 45b which abuts the flange 45a of collar 44. Under static conditions, the springs 49 urge pressure collar away from the impeller 12 and biases washer 72 into engagement with washer 62.

Thus, during non-pumping, static conditions the end face washers 62 and 72 are engaged and seal the space 20 against loss of fluid. However, relative rotation between these engaged washers cause energy losses through heat and friction. For this reason, the dynamic seal 30 through its pumping action seals the space 20 during rotation of the shaft 16 and such pumping action simultaneously disengages the faces of the washers 62 and 72. This pumping and sealing action of dynamic seal 30 does utilize power but substantially less power than the end face seal 60. Moreover, since the dynamic seal disengages the washers 62 and 72, wear of their radial faces is significantly reduced. This reduction substantially increases the life of the washers and eliminates replacement costs.

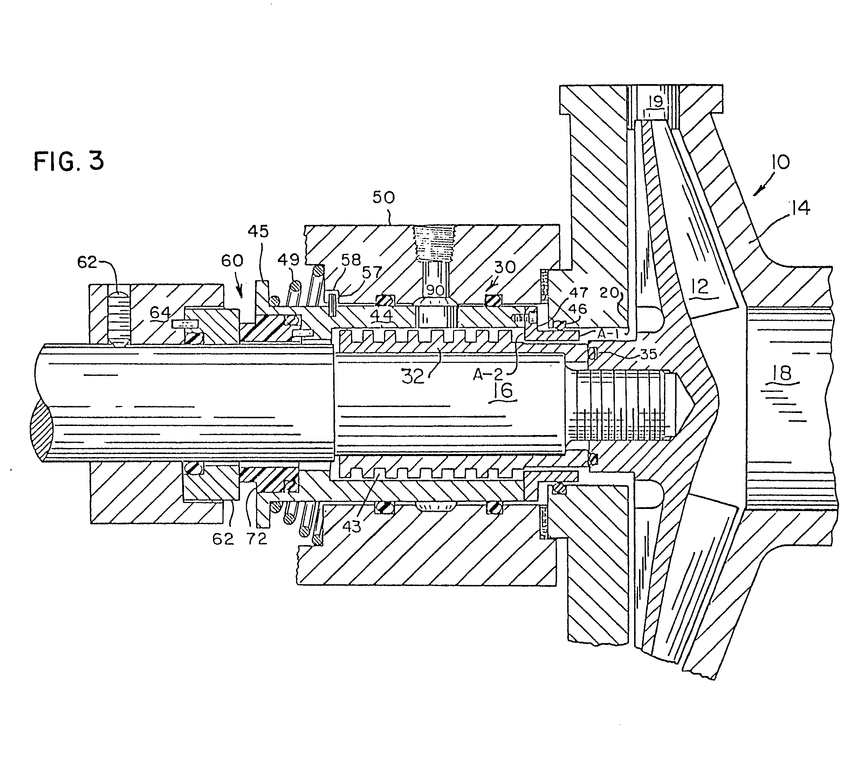

Another embodiment of our invention is depicted in FIGURE 3. Similar to the first embodiment, this tandem seal has a dynamic seal 30 and a static end face seal 60. However, the dynamic seal 30 has only one pumping ring 32 which is directly carried by the shaft 16. The pressure sensitive collar 44 is provided with an outwardly extending flange 45 which is biased away from impeller 12 by a single coil spring 49. On the opposite end of the pressure collar 44 is a cylindrical flange 47 which has an L-shape cross section providing the areas A—1 and A—2 upon which fluid pressure acts. To permit assembly over the shaft, the flange 47 is bolted to pressure collar 44 as shown. One or more pins 57 acting within elongated slots 58 preclude rotational movement of collar 44 while permitting axial movement.

This embodiment also includes a pressure connection between the output port 19 of the pump and the pressure collar 44. Conduits (not shown) interconnect the port 19 with an aperture 90 in the flange 50. O-ring seals are placed on opposite sides of this aperture directing the fluid inwardly of collar 44. This fluid is pumped towards the impeller 12 to act against the area A—2 of radial flange 47. Contrary to our prior embodiment, in which the pumping ring 32 develops pressure with limited fluid flow, this embodiment develops pressure and may have continued fluid flow through the pressure sensitive chamber 43.

The design of either embodiment may, in part be dictated by costs, space limitations and functional parameters of the pump unit 10. Those skilled in the art will appreciate that modifications of the various parts may be required to meet the various existing pump designs.

Further, the invention is not limited to pump applications but may be used as a tandem labyrinth-end face seal having other applications. Similarly, the pumping action within the dynamic seal may take many forms.

## Claims

1. A low energy tandem seal for sealing the space (20) between a housing (14) and a shaft (16), the seal including a dynamic sealing means, (30), pumping means (32), and a static sealing means (60) interconnected to each other and interposed between said housing (14) and said shaft (16), characterized in that said sealing means (30, 60) receive fluid to be sealed from said housing (14), said static sealing means (60) precluding the loss of fluid from said housing (14) when said shaft (16) is not rotating, said dynamic sealing means (30) including the pumping means (32) for pumping the fluid to be sealed back to said housing (14) and for axially translating a member (56) which includes a portion of the dynamic sealing means in response to pumping of sealed fluid to disengage said static seal (60) said static seal including a portion (72) carried by said member and axially translated with said member.

2. The seal of claim 1, characterized in that said dynamic sealing means (30) is provided with a spring bias (49) opposing axial translation of said dynamic sealing means (30).

3. The seal of claim 1 or 2, characterized in that said dynamic sealing means (30) and said static sealing means (60) are carried by an elongated sleeve (34) adapted to be mounted upon said shaft (16).

4. The seal of claim 1, 2 or 3, characterized in that said static sealing means (60) is a mechanical end face seal having two sealing washers (62, 72) with radial seal faces (70, 74), one of said washers (72) being axially movable with said dynamic sealing means (30).

5. The seal of any preceding claim, characterized in that said dynamic sealing means (30) includes an elongated threaded pumping ring (32).

6. the seal of any preceding claim, characterized in that said dynamic sealing means (30) is connected to a pressure source (19) which delivers fluid pressure to said dynamic sealing means (30).

7. The seal of claim 1, characterized in that said static sealing means (60) is an end face seal (60) having two washers (62, 72) with mating, radially extending flat surfaces (70, 74) for sealing said space (20) when said shaft (16) is not rotating, one of said washers (62) being sealingly mounted upon the shaft (16) for rotation therewith; said dynamic sealing means (30) being mounted concentrically of said shaft (16) and adapted to seal said space (20) against fluid leakage upon rotation of said shaft (16) and including pressure responsive means (44) for axial translation in response to pressure; said other washer (72) of said end face seal (60) being connected to said pressure responsive means (44) for axial translation and separation of said washers (62, 72) in response to fluid pressure.

8. The seal of claim 7, characterized in that said dynamic sealing means (30) includes means (32) mounted on said shaft (16) for developing substantially all of said fluid pressure.

9. The seal of claim 8, characterized in that said means (32) for developing fluid pressure includes elongated concentrically mounted internally and externally threaded pumping rings (32, 56) and a reaction surface area (A—2).

10. The seal of claim 8, characterized in that said pressure responsive means is a biased collar (44) concentrically mounted over said shaft (16) and sealingly mounted in said housing (14).

11. The seal of claim 1, characterized in that said dynamic sealing means (30) includes an axially movable pressure responsive collar (44) sealingly mounted on said housing (14) concentrically of said shaft (16); threaded pumping ring means (32) interposed between said collar (44) and said shaft (16) for developing fluid pressure opposing leakage of fluid from said housing (14) and for axially moving said collar (44) upon rotation of said shaft (16) and development of fluid pressure; said static sealing means precluding leakage of fluid from said housing (14) when said shaft (16) is not developing sufficient pressure for axially moving said collar (44) including a first sealing washer (62) sealingly mounted upon said shaft (16) and having a radially extending sealing face (70); a second sealing washer (72) sealingly mounted upon said collar (44) and having a radially extending sealing face (74) opposing the sealing face (70) of said first washer (62), said washers (62, 72) being in sealing contact when said shaft (16) is stationary and being separated by said pressure responsive collar (44) upon the development of fluid pressure.

12. The seal of claim 11, characterized in that said threaded pumping means (32) is an externally threaded member, and an internally threaded member (56) is concentrically mounted within said collar (44) circumscribing said externally threaded member (32).

13. The seal of any preceding claim, characterized in that said seal is an elongated unit adapted to be mounted concentric of said shaft (16).

## Revendications

1. Un double joint d'étanchéité à friction réduite pour assurer l'étanchéité de l'espace (20) entre un carter (14) et un arbre (16), le joint comprenant un moyen d'étanchéité dynamique (30), un moyen de pompage (32) et un moyen d'étanchéité statique (60) reliés entre eux et interposés entre ledit carter (14) et ledit arbre (16), joint caractérisé en ce que lesdits moyens d'étanchéité (30, 60) reçoivent du fluide à étancher en provenance dudit carter (14), ledit moyen d'étanchéité statique (60) empêchant une perte de fluid à partir dudit carter (14) quand ledit arbre (16) ne tourne pas, ledit moyen d'étanchéité dynamique (30) comprenant le moyen de pompage (32) pour pomper le fluide à étancher et le renvoyer vers le carter (14) et pour assurer une translation axiale d'une élément (56) qui comprend ou constitue une partie du moyen d'étanchéité dynamique en réponse à un pompage du fluide étanché afin de désaccoupler ledit joint statique (60), ce joint statique comprenant une partie (72) portée par ledit élément et entraînée en translation axiale avec ledit élément.

2. Le joint d'étanchéité de la revendication 1, caractérisé en ce que ledit moyen d'étanchéité dynamique (30) est pourvu d'un organe élastique de poussée (49) s'opposant à une translation axiale dudit moyen d'étanchéité dynamique (30).

3. Le joint d'étanchéité de la revendication 1 ou 2, caractérisé en ce que ledit moyen d'étanchéité dynamique (30) et ledit moyen d'étanchéité statique (60) sont portés par un manchon allongé (34) destiné à être monté sur ledit arbre (16).

4. Le joint d'étanchéité de la revendication 1, 2 ou 3, caractérisé en ce que ledit moyen d'étanchéité statique (60) est un joint mécanique à faces radiales comportant deux rondelles d'étanchéité (62, 72) pourvues de faces radiales d'étanchéité (70, 74), une desdites rondelles (72) étant déplaçable axialement avec ledit moyen d'étanchéité dynamique (30).

5. Le joint d'étanchéité de l'une quelconque des revendications précédentes, caractérisé en ce que ledit moyen d'étanchéité dynamique (30) comprend un anneau de pompage fileté allongé (32).

6. Le joint d'étanchéité de l'une quelconque des revendications précédentes, caractérisé en ce que ledit moyen d'étanchéité dynamique (30) est relié à une source de pression (19) qui fournit du fluide sous pression audit moyen d'étanchéité dynamique (30).

7. Le joint d'étanchéité de la revendication 1, caractérisé en ce que ledit moyen d'étanchéité statique (60) est un joint d'étenchéité à faces radiales (60) comportant deux rondelles (62, 72) pourvues de surfaces planes correspondantes s'étendant radialement (70, 74) pour assurer l'étanchéité dudit intervalle (20) quand ledit arbre (16) ne tourne pas, une desdites rondelles (62) étant montée de façon étanche sur l'arbre (16) pour tourner avec lui; ledit moyen d'étanchéité dynamique (30) étant monté concentriquement à l'arbre (16) et étant destiné à assurer l'étanchéité dudit espace (20) contre une fuite de fluide lors d'une rotation dudit arbre (16) et comprenant un moyen (44) sensible à la pression pour exécuter une translation axiale en réponse à une pression; ladite autre rondelles (72) dudit joint d'étanchéité à faces radiales (60) étant reliée audit moyen (44) sensible à la pression pour exécuter une translation axiale et assurer une séparation desdites rondelles (62, 72) en réponse à une pression fluidique.

8. Le joint d'étanchéité de la revendication 7, caractérisé en ce que ledit moyen d'étanchéité dynamique (30) comprend un moyen (32) monté sur ledit arbre (16) pour produire sensiblement toute ladite pression fluidique.

9. Le joint d'étanchéité de la revendication 8, caractérisé en ce que ledit moyen (32) de génération de pression fluidique comprend des anneaux allongés de pompage (32, 56), montés concentriquement et filetés intérieurement et extérieurement, ainsi qu'une zone de surface de réaction (A—2).

10. Le joint d'étanchéité de la revendication 8, caractérisé en ce que ledit moyen sensible à la pression est un fourreau (44) soumis à une poussée, monté concentriquement sur ledit arbre (16) et monté de façon étanche dans ledit carter (14).

11. Le joint d'étanchéité de la revendication 1, caractérisé en ce que ledit moyen d'étanchéité dynamique (30) comprend un fourreau (44) déplaçable axialement, sensible à la pression et monté de façon étanche dans le carter 14 concentriquement audit arbre (16); un anneau fileté de pompage (32) interposé entre ledit fourreau (44) et ledit arbre (16) pour produire une pression fluidique s'opposant à une fuite de fluide à partir dudit carter (14) et pour déplacer axialement ledit fourreau (44) lors d'une rotation dudit arbre (16) et d'une génération de pression fluidique; ledit moyen d'étanchéité statique empêchant une fuite de fluide à partir dudit carter (14) quand ledit arbre (16) ne produit pas une pression suffisante pour déplacer axialement ledit fourreau (44) comprenant une première rondelle d'étanchéité (62) montée de façon étanche sur ledit arbre (16) et comportant une face d'étanchéité s'étendant radialement (70); une seconde rondelle d'étanchéité (72) montée de façon étanche sur ledit fourreau (44) et comportant une face d'étanchéité s'étendant radialement (74) et placée en regard de la face d'étanchéité (70) de la première bague (62), lesdites rondelles (62, 72) étant en contact étanche lorsque ledit arbre (16) est stationnaire et étant séparées par ledit fourreau (44) sensible à la pression lors de la génération d'une pression fluidique.

12. Le joint d'étanchéité de la revendication 11, caractérisé en ce que ledit moyen de pompage fileté (32) est un élément fileté extérieurement, et un élément fileté intérieurement (56) est monté concentriquement à l'intérieur dudit fourreau (44) en entourant ledit élément fileté extérieurement (32).

13. Le joint d'étanchéité de l'une quelconque des revendications précédentes, caractérisé en ce que ledit joint d'étanchéité est une unité allongée destinée à être montée concentriquement par rapport à l'arbre (16).

**Patentansprüche**

1. Wenig Energie verbrauchende Tandemdichtung zum Abdichten des Spaltes (20) zwischen einem Gehäuse (14) und einer Welle (16), mit einer dynamisch wirkenden Dichteinrichtung (30) einer Pumpeinrichtung (32) und einer statisch wirkenden Dichteinrichtung (60), die zwischen dem Gehäuse (14) und der Welle (16) angeordnet und miteinander verbunden sind, dadurch gekennzeichnet, daß den Dichteinrichtungen (30, 60) abzudichtendes Fluid von dem Gehäuse (14) zugeführt wird, daß die statisch wirkende Dichteinrichtung (60) bei nicht rotierender Welle (16) einen Verlust von Fluid aus dem Gehäuse verhindert, daß die dynamisch wirkende Dichteinrichtung (30) die Pumpeinrichtung (32) umfaßt, die zum Zurückpumpen des abzudichtenden Fluids zu dem Gehäuse (14) und dazu dient, unter der Einwirkung des Pumpens des abgedichteten Fluids die statisch wirkende Dichteinrichtung (60) durch ein Axialverschieben eines Gliedes (56) abzuheben, das einen Teil der dynamisch wirkenden Dichteinrichtung umfaßt, die ihrerseits einen Teil (72) besitzt, der von dem genannten Glied getragen wird und mit ihm axialverschiebbar ist.

2. Dichtung nach Anspruch 1, dadurch gekennzeichnet, daß die dynamisch wirkende Dichteinrichtung (30) mit einer sie vorbelastenden Federeinrichtung (49) versehen ist, die der Axialverschiebung der dynamisch wirkenden Dichteinrichtung (30) entgegenwirkt.

3. Dichtung nach Anspruch 1 oder 2, dadurch gekennzeichnet, daß die dynamisch wirkende Dichteinrichtung (30) und die statisch wirkende Dichteinrichtung (60) von einer langgestreckten Hülse (34) getragen werden, die auf der Welle (16) montierbar ist.

4. Dichtung nach Anspruch 1, 2 oder 3, dadurch gekennzeichnet, daß die statisch wirkende Dichteinrichtung (60) eine mechanische Stirnflächendichtung mit zwei Dichtscheiben (62, 72) ist, die radiale Dichtflächen (70, 74) aufweisen und von denen eine (72) mit der dynamisch wirkenden Dichteinrichtung (30) axialbewegbar ist.

5. Dichtung nach einen der vorhergehenden Ansprüche, dadurch gekennzeichnet, daß die dynamisch wirkende Dichteinrichtung (30) einen langgestreckten gewindetragenden Pumpring (32) aufweist.

6. Dichtung nach einem der vorhergehenden Ansprüche, dadurch gekennzeichnet, daß die dynamisch wirkende Dichteinrichtung (30) mit einer Druckquelle (19) verbunden ist, von der die dynamisch wirkende Dichteinrichtung (30) mit Fluiddruck beaufschlagt wird.

7. Dichtung nach Anspruch 1, dadurch gekennzeichnet, daß die statische Dichteinrichtung (60) eine Stirnflächendichtung (60) mit zwei Dichtscheiben (62, 72) besitzt, die zueinander komplemantäre, ebene und sich radial erstreckende Flächen (70, 74) besitzen, die dazu dienen, den genannten Spalt (20) bei nicht rotiernder Welle (16) abzudichten, daß die eine dieser Scheiben (62) dicht auf der Welle (16) montiert und mit ihr drehfest ist, daß die dynamisch wirkende Dichteinrichtung (30) konzentrisch zu der Welle (16) montiert und geeignet ist, bei rotierender Welle (16) den Spalt (20) gegen ein Lecken von Fluid abzudichten, und druckabhängige Mittel (44) aufweist, die bei Druckbeaufschlagung eine Axialverschiebung bewirken, und daß der die andere Scheibe (72) der Stirnflächendichtung (60) mit der druckabhängigen Einrichtung (44) derart verbunden ist, daß bei einer Druckbeaufschlagung diese Scheibe (72) axialverschoben wird und die Scheiben (62, 72) voneinander getrennt werden.

8. Dichtung nach Anspruch 7, dadurch gekennzeichnet, daß die dynamisch wirkende Dichteinrichtung (30) auf der Welle (16) montierte Mittel (32) zum Erzeugen im wesentlichen des gesamten genannten Fluiddruckes umfaßt.

9. Dichtung nach Anspruch 8, dadurch gekennzeichnet, daß die Mittel (32) zum Erzeugen des Druckmitteldruckes langgestreckte, konzentrisch montierte innen- bzw. außengewindetragende Pumpringe (32, 56) und eine Reaktionsfläche (A—2) umfassen.

10. Dichtung nach Anspruch 8, dadurch gekennzeichnet, daß die druckabhängige Einrichtung ein vorbelasteter Stellring (44) ist, der die Welle (16) konzentrisch umgibt und in dem Gehäuse (14) dicht montiert ist.

11. Dichtung nach Anspruch 1, dadurch gekennzeichnet, daß die dynamisch wirkende Dichteinrichtung (30) einen axialbewegbaren, druckabhängigen Stellring (44) besitzt, der in dem Gehäuse (14) dicht und zu der Welle (16) konzentrisch montiert ist, ferner eine gewindetragende Pumpringanordnung (32), die zwischen dem Stellring (44) und der Welle (16) angeordnet ist und dazu dient, bei rotierender Welle (16) und Erzeugung eines Fluiddruckes einen Fluiddruck zu erzeugen, der einem Lecken von Fluid aus dem Gehäuse (14) entgegenwirkt, und den Stellring (44) axial zu bewegen, daß die statisch wirkende Dichteinrichtung eine Lecken von Fluid aus dem Gehäuse (14) verhindert, wenn die Welle (16) keinen Druck erzeugt, der zum Axialbewegen des Stellringes (44) genügt, und eine erste Dichtscheibe (62) besitzt, die auf der Welle (16) dicht montiert ist und eine sich radial erstreckende Dichtfläche (70) besitzt, ferner eine zweite Dichtscheibe (72), die auf dem Stellring (44) dicht montiert ist und eine sich radial erstreckende Dichtfläche (74) besitzt, die der Dichtfläche (70) der ersten Dichtscheibe (62) zugekehrt ist, wobei diese Scheiben (62, 72) dicht aneinanderliegen, wenn die Welle (16) stillsteht, und sie durch den druckabhängigen Stellring (44) voneinander getrennt werden, wenn ein Fluiddruck erzeugt wird.

12. Dichtung nach Anspruch 11, dadurch gekennzeichnet, daß die gewindetragende Pumpeinrichtung (32) aus einem außengewindetragenden Glied besteht und in dem Stellring (44) ein innengewindetragendes Glied (56) montiert ist, welches das außengewindetragende Glied (32) umgibt.

13. Dichtung nach einem der vorhergehenden Ansprüche, dadurch gekennzeichnet, daß die Dichtung eine langgestreckte Einheit ist, die konzentrisch auf der Welle (16) montierbar ist.

FIG. I

0049719

FIG. 2

0049719

FIG. 3

0 049 719